# EUROPEAN PATENT SPECIFICATION

(11) **EP 1 607 286 B1**
(45) Date of publication and mention of the grant of the patent: **14.05.2008**
(21) Application number: 04102812.7
(22) Date of filing: 18.06.2004
(51) Int. Cl.: B60R 22/20, B60R 22/26, B60R 22/02

(54) **Device for adjusting a vehicle occupant restraint apparatus**
Einrichtung zur Anpassung einer Fahrzeuginsassen-Rückhaltevorrichtung
Dispositif de réglage d'un système de retenue pour les occupants d'un véhicule

(43) Date of publication of application: 21.12.2005
(73) Proprietor: Ford Global Technologies, LLC, Dearborn, MI 48126 (US)
(72) Inventor: Spahl, Robert, 51109, Köln (DE); Varcus, Johannes, 45549, Sprockhövel (DE); Scott, Tim, Benfleet, Essex SS7 5TA, (GB)
(74) Representative: Dörfler, Thomas

(56) References cited:
- EP-A- 0 374 893
- FR-A- 2 695 893
- US-A- 4 616 850
- US-A- 4 884 825
- US-A- 5 358 310

## Description

The present invention relates to a device for adjusting a vehicle occupant restraint apparatus comprising a reclining seat with a seat belt system, said seat belt system comprising a webbing, an attachment on one side of the seat and a fixable guide on the opposite side, particularly in automobiles.

A seat or safety belt system directs the seat belt webbing to extend across the occupant of a vehicle seat. For example, in a three point seat belt system, one end of the webbing is wound on a spool in a retractor and the other end of the webbing is connected to an attachment. The retractor and the attachment of both fixed to the vehicle or the seat to one side of the seat. A tongue or guide is slidable along the length of the webbing. The system further includes a buckle which is fixed to the vehicle or to the seat at the opposite side of the seat. When the tongue or guide on the webbing is locked in the buckle a lap/pelvis belt section of the webbing extends from the attachment to the tongue/guide across the occupant's lap. A shoulder belt section of the webbing may extend from the retractor to the tongue/guide across the occupant's torso.

In uncontrolled situations or even accidents the seat belts retain the occupants in their seats and therefore prevent injuries. Seat belt or safety belt systems can only achieve their safety function, when being adapted to the strapped in occupant and his seating position.

From the US 5,733,013 and US 4,616,850 devices are known, which allow the adjustment of seat belt systems according to the height of the occupants by adjustment of the position of the shoulder belt section of the seat belt webbing. However these devices do not allow adjustment or compensation of the seat belts according to the seating position of the occupant.

Modern automobiles include so-called "comfort seats" which allow the occupant to reside not only in normal upright seating position but also in a position in which the seat back is reclined. The seat back may even be reclined to the extent that the occupant may reside in a so-called "sleeping position", i.e. an almost horizontal orientation. When reclining the seat back the seat cushion or seat pan may also be tilted into a comfortable position and a footrest may be extended.

FR 2695893 shows the features of the preamble of claim 1 and discloses a seat belt attachment device which moves the attachment in forward or forward and upward direction when the seat back rest is reclining. The movement of the attachment is resulting from a lever, extending from the back rest below the axis of the seat back reclining mechanism. Preferably the forward and upward movement is following a curve in an arcuated guided slot, but could also be a straight horizontal guiding slot. In the latter case a second guiding slot in the lever is required. Proper securing of the passenger in the pelvis area may be hardly achieved when the seat back is fully reclined.

In US 5358310 a seat belt is fitted to the shoulder of a passenger by moving a guide down the back rest when reclining. This arrangement would not solve the issue in the pelvis area of the passenger.

The known seat belt or safety belt systems do not allow for optimal fitting to an occupant in such a position. In case of an accident there is the risk that the occupant may "submarine" or slide beneath the seat belt webbing and therefore not be retained adequately and so be prone to injury.

Object of the invention is to provide a device which allows retaining the occupant independently of the seating position. Particularly the invention should prevent the occupant from sliding (submarining) beneath the seat belt webbing in case of an accident, while the seat back is in a reclined position.

This object is solved by a device for adjusting a vehicle occupant restraint apparatus according to claim 1.

The present invention enables the seat belt geometry to be adjusted, so that the seat belt fitting prevents submarining also with a reclined seat back and even in a "sleeping" or horizontal position. Therefore its retaining function is independent of the seating position.

Horizontal and vertical are to be understood as directions relative to the direction of travel of the vehicle. In automobiles for example "horizontal" will therefore mean an orientation in a direction along the longitudinal axis of the automobile and "vertical" will correspond to an orientation in direction of the height of the automobile. It is understood that in cases where the seating direction is different from the vehicle longitudinal axis, horizontal and vertical refers to the seating position. It is also understood that the horizontal movement could be both in longitudinal and in sideward direction of the seat if a sideward movement is required.

The adjustment of the position of the seat belt webbing is provided by slidable movement of the attachment and/or guide, preferably both. The attachment and/or guide may be mounted for slidable movement along the seat pan. The slidable movement may be realized by any suitable manual and/or mechanical means known in the art.

The attachment and/or guide of seat belt systems are usually arranged and fixed in the area of the "seat hinge", i.e. the region around the pivot axis between the seat back and seat pan. This arrangement of the seat belt corresponds to the normal upright or vertical seating position.

According to the invention the position of the seat belt webbing in the substantially horizontal or "sleeping" seating position is arranged relatively more forward and downward than in the substantially vertical (normal) seating position described above. This allows for beneficial positioning of the seat belt to achieve superior retaining of the occupant in an accident even with a reclined seating position.

To achieve such a positioning the device according to the invention comprises means by which the attachment and/or guide are mounted for slidable diagonal movement in forward and downward direction (when seen in vehicle travel direction).

Usually the seat belt webbing includes a lap/pelvis belt section and a shoulder belt section. According to the present invention the lap/pelvis belt section is adjustable by means of said device, as the lap/pelvis section of the seat belt is vital for retaining the occupant, particularly in a reclined seating position.

It is known for seat belt systems to comprise a three point seat belt including a mounting structure near the shoulders. In this case the mounting structure may be attached to the B-pillar of the vehicle or to the shoulder portion of the seat of a vehicle. The mounting structure of the seat belt system may further include a guide, which allows for adjustment of the seat belt webbing according to occupant height, as to allow for better retaining. In combination with the present invention these designs allow for optimal positioning of the seat belt webbing.

In a further embodiment of the invention the device comprises means for adjusting the position of the seat belt webbing according to the angle of recline of the seat back.

Preferably the means for positioning of the seat belt webbing are then mechanically coupled to the seat back so as to be adjusted according to the angle of recline of the seat back. This may for example be achieved by mechanically coupling the seat back and the means via intermeshing gears. Favorably these means will be arranged in the area of the seat hinge, where often the means for adjustment of the seat back recline is accommodated, preferably within the seat hinge housing.

The adjustment of the position of the seat belt webbing according to the invention may be automatic. This can be realized by coupling the seating position to the seat belt adjustment by mechanical, electronic, electrical, pneumatic or hydraulic means for example. The aforementioned means may be controlled via the vehicle electronics and according to appropriate sensors, such as angle sensors for determining seat back recline, e.g. potentiometers.

Basically this invention can be applied for all type of seat belts, where at least two attachments are available beside a seat. The ideas of this invention also be applied to an occupant that faces rearwards or in any other direction. The protection is then improved for according crashes, for example rear crashes or side crashes. Further the invention can be applied in all type of transportation means comprising reclining seats, for example passenger cars, trucks, buses, coaches, trains, airplanes, boats, ships, ferries.

The foregoing and other features of the present invention will become apparent to one skilled in the art upon consideration of the following description of the invention with reference to the accompanying drawings, wherein:
- Fig. 1: is a schematic front view of a vehicle seat with a vehicle seat belt system according to the present invention in an upright normal seating position;
- Fig. 2: is a schematic side view of the vehicle seat shown in Fig. 1, and
- Fig. 3: is the vehicle seat shown in Fig. 1 and 2 in a horizontal or sleeping seating position.

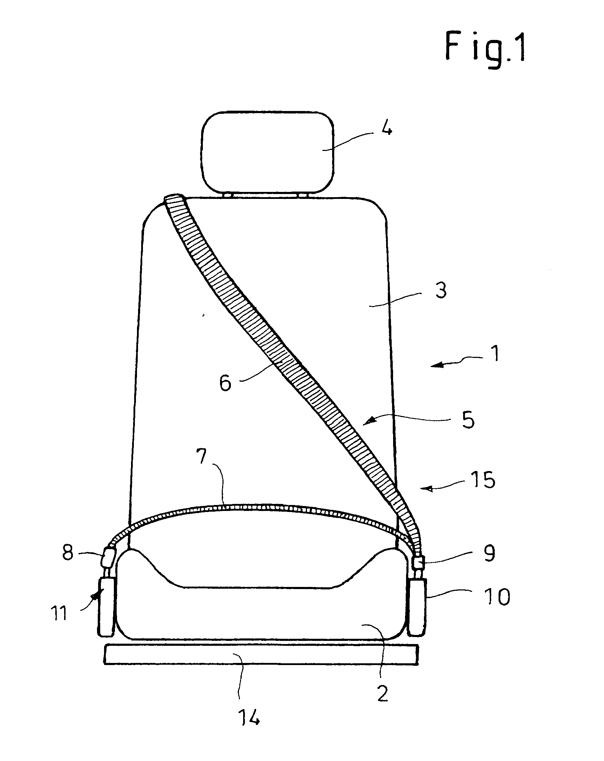

In Fig. 1 a comfort seat 1 with a seat belt system 15 is schematically shown in a front view. The seat 1 includes a seat pan or cushion 2 and a seat back 3 with top mounted a head rest 4. The seat pan 2 is supported by a seat mounting 14, which allows for slidable and/or height adjustment of the seat and in turn is fixed to the vehicle floor (not shown). The seat pan 2 is arranged in an almost horizontal orientation and includes elevated side areas.

The seat back 3 is pivotally attached to the seat pan 2 via a seat hinge 11, which is arranged on either side of the seat. The angle or recline of the seat back 3 may be changed by turning a knob 16, which is part of the seat hinge 11 and exercises a force, so as to pivot the seat back around an axis parallel to said knob 16.

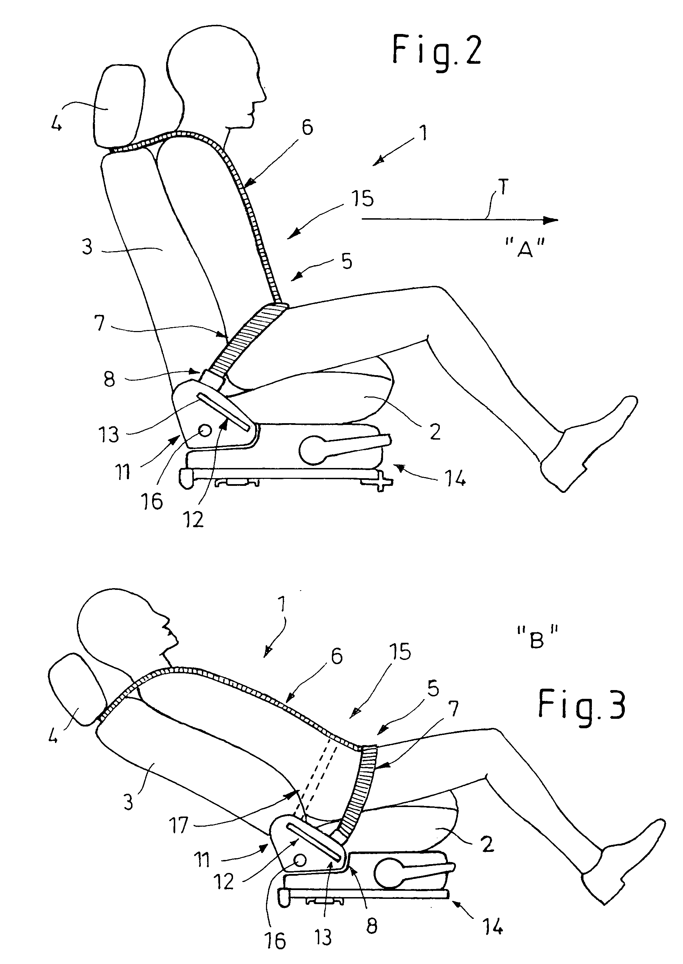

The seat belt system 15 includes a seat belt webbing 5 for restraining an occupant (see Fig. 2) facing in travel direction T. The webbing 5 extends from an attachment 8 on the left side of the seat across the seat pan 2 to the opposite side of the seat, where it is threaded through a slotted guide 9. This section of the webbing forms the lap/pelvis belt section 7. The webbing is made of any suitable material known in the art.

The guide 9 or tongue is slidable along the webbing 5 and is lockable in a corresponding buckle 10. In the figures, the guide 9 is shown in a state locked in the buckle 10. These tongue and buckle locking arrangements are readily known to those skilled in the art and will therefore not be explained in detail.

The webbing 5 is redirected by the guide 9 and extends diagonally upwards and back across the seat 1 or seat back 3 to the shoulder area near the head rest 4, in doing so crossing the occupant's torso. This section of the webbing forms the shoulder belt section 6.

The webbing 5 ends in a mounting structure located on the back side of the seat back 3 and is therefore not shown. Alternatively the mounting structure may be arranged on a B-pillar of the vehicle.

The mounting structure includes a retractor by which the webbing 5 is tensioned and rolled up. The mounting structure may also include means for adjusting the position of the shoulder belt section 6 of the webbing according to the height of the occupant.

In Fig. 1 and 2 the seat back 3 is shown in a substantially vertical seating position. This means that the seat back 3 and the direction of travel T of the vehicle are almost perpendicular. The occupant is therefore sitting in an upright or normal seating position, which will be further referenced as position A.

In this normal seating position A the lap/pelvis belt section 7 of the seat belt webbing 5 extends from the seat hinge 11 across the lap or pelvis of the occupant to the locked guide 9. The attachment 8 and the guide 9 are fixed to the seat hinge 11 housing in a position above the turn knob 16. With this configuration the restraining function of the seat belt system 15 is adequate for uncontrolled situations and the occupant is prevented from being injured.

On the other hand the occupant of the seat 1 may wish to further recline the seat back 3 of his seat to a more comfortable substantially horizontal or so-called "sleeping position". Such a position is shown in Fig. 3 and will be further referenced as position B.

In position B an ordinary seat belt would be displaced relatively to the occupant and as a result cross the occupant above the pelvis in the stomach region, which is indicated by the dashed lines 17 in Fig. 3. This position of the seat belt webbing is unfavorable and not adequate for restraining the occupant when necessary. Submarining may occur.

According to the invention the seat belt webbing 5 in general and in particular the lap/pelvis belt section 7 is adjusted according to the seating position B of the occupant.

In the preferred embodiment shown in Fig. 3 this is realized by movement of the lap/pelvis belt section 7 forward in direction of the travel path along the seat pan 2 and downward in direction of the seat mounting 14, when compared to position A of Fig. 1.

The lap/pelvis belt section 7 now crosses between the lap or pelvis and the thighs of the occupant. This seat belt webbing position is favorable to achieve the necessary retaining of the occupant and considerably reduces the risk of submarining or sliding beneath the seat belt.

The movement of the webbing 5 in general and the lap/pelvis belt section 7 in particular is achieved by movement of the attachment 8 on one side of the seat and the guide 9 on the opposite side of the seat. The movement of the guide 9 preferably includes a corresponding movement of the buckle 10.

The attachment 8 and the guide 9 are slidably moved along the seat pan in horizontal and vertical direction as defined above. The attachment 8 and the guide 9 are now fixed to the seat hinge 11 housing in a position almost in the same plane with and forward of the turn knob 16.

This movement is carried out by moving the attachment 8 and the guide 9 along tracks 12 in the respective housings of the seat hinges 11 on both sides of the seat.

The tracks 12 extend diagonally down- and forward in travel direction T. The attachment 8 and the guide 9 are slidably mounted on the tracks 12 by means of pins 13 or other suitable means, indicated in Fig. 2 and Fig. 3, around whose axis the attachment 8 and the guide 9 may pivot when being displaced horizontally and vertically, to allow suitable and comfortable alignment of the seat belt webbing.

The movement itself is coupled to the recline or angle of the seat back 3 by means of intermeshing gears (not shown) that are operated by turning the knob 16.

For example turning the knob 16 clockwise will bring the seat back 3 to a more upright position (e.g. A). Simultaneously the attachment 8 and the guide 9 will slide along the tracks 12 in an up- and backward direction, whereby the lap/pelvis belt section will be in a position similar to or identical with position A (see fig. 2).

The counter movement, i.e. turning the knob 16 counterclockwise will bring the seat back 3 to a more reclined or horizontal position (e.g. B). Likewise the attachment 8 and the guide 9 will simultaneously slide along the tracks 12 in a down- and forward direction, whereby the lap/pelvis belt section will take a position corresponding with position B (see fig. 3).

For those skilled in the art it will become apparent from the aforementioned description that the invention also provides superior retaining by the seat belt system 15 in positions between the two positions A and B shown. Such intermediate positions also experience the advantages of the invention as the adjustment of the seat belt by means of the inventive device may be continuous or stepless and intermediate positions may be set.

## Claims

1. Device for adjusting a vehicle occupant restraint apparatus comprising a reclining seat (1) with a seat belt system (15), said seat belt system comprising a webbing (5,6,7), an attachment (8) on one side of the seat and a fixable guide (9) on the opposite side, wherein the device further comprises means (8,9,12) by which the position of the seat belt webbing (5,7) is adjustable according to the seating position (A,B) of the occupant, said seating position ranging from substantially vertical (A) to substantially horizontal (B),
**characterised in that** the position of the seat belt webbing (2) in the substantially horizontal seating position (B) is arranged relatively more forward and downward than in the substantially vertical seating position (A), and the device comprising means (12) by which the attachment (8) and/or guide (9) are mounted for slidable diagonal movement in forward and downward direction.

2. Device according to one of the proceeding claims, wherein the seat belt webbing (5) includes a lap/pelvis belt section (7) and a shoulder belt section (6) and the lap/pelvis belt (7) section is adjustable by means of said device.

3. Device according to claim 2, wherein the seat belt system comprises a three point seat belt including a mounting structure.

4. Device according to claim 3, wherein the mounting structure is attached to the B-pillar of the vehicle.

5. Device according to claim 3, wherein the mounting structure is attached to the shoulder portion of the seat of the vehicle.

6. Device according to one of the proceeding claims, comprising means for adjusting the position of the seat belt webbing according to the angle of recline of the seat back (3).

7. Device according to claim 6, wherein the means for positioning of the seat belt webbing are mechanically coupled to the seat back (3) so as to be adjusted according to the angle of recline of the seat back (3).

8. Device according to claim 7, wherein the seat back and the means are mechanically coupled via intermeshing gears.

9. Device according to claim 6, wherein the means for positioning of the seat belt webbing are electronically coupled to the seat back (3) so as to be adjusted according to the angle of recline of the seat back (3).

10. Device according to one of the proceeding claims, comprising means for automatically adjusting the position of the seat belt webbing.

## Patentansprüche

1. Vorrichtung zur Einstellung einer Fahrzeuginsassenrückhaltevorrichtung, die einen Liegesitz (1) mit einem Sitzgurtsystem (15) umfasst, wobei das Sitzgurtsystem ein Gurtband (5, 6, 7), eine Halterung (8) auf einer Seite des Sitzes und eine festlegbare Führung (9) auf der anderen Seite umfasst, wobei die Vorrichtung weiterhin Mittel (8, 9, 12) umfasst, durch die die Position des Sitzgurtbands (5, 7) gemäß der Sitzposition (A, B) des Insassen verstellbar ist, wobei die Sitzposition von im Wesentlichen vertikal (A) bis im Wesentlichen horizontal (B) reicht,
**dadurch gekennzeichnet, dass** die Position des Sitzgurtbands (5, 7) in der im Wesentlichen horizontalen Sitzposition (B) im Verhältnis weiter vorne und niedriger angeordnet ist als in der im Wesentlichen vertikalen Sitzposition (A) und die Vorrichtung Mittel (12) umfasst, durch die die Halterung (8) und/oder die Führung (9) zur Diagonalverschiebung in Vorwärts- und Rückwärtsrichtung angebracht sind.

2. Vorrichtung nach Anspruch 1, wobei das Sitzgurtband (5) einen Hüft-/Beckengurtabschnitt (7) und einen Schultergurtabschnitt (6) enthält und der Hüft-/Beckengurtabschnitt (7) mittels der Vorrichtung einstellbar ist.

3. Vorrichtung nach Anspruch 2, wobei das Sitzgurtsystem einen Dreipunktsitzgurt umfasst, der eine Befestigungsstruktur enthält.

4. Vorrichtung nach Anspruch 3, wobei die Befestigungsstruktur an der B-Säule des Fahrzeugs befestigt ist.

5. Vorrichtung nach Anspruch 3, wobei die Befestigungsstruktur am Schulterteil des Fahrzeugsitzes befestigt ist.

6. Vorrichtung nach einem der vorhergehenden Ansprüche, die Mittel zur Einstellung der Position des Sitzgurtbands gemäß dem Neigungswinkel der Sitzrückenlehne (3) umfasst.

7. Vorrichtung nach Anspruch 6, wobei die Mittel zur Positionierung des Sitzgurtbands mechanisch mit der Sitzrückenlehne (3) verbunden sind, um gemäß dem Neigungswinkel der Sitzrückenlehne (3) eingestellt zu werden.

8. Vorrichtung nach Anspruch 7, wobei die Sitzrückenlehne und die Mittel über ineinandergreifende Zahnräder mechanisch verbunden sind.

9. Vorrichtung nach Anspruch 6, wobei die Mittel zur Positionierung des Sitzgurtbands elektronisch mit der Sitzrückenlehne (3) verbunden sind, um gemäß dem Neigungswinkel der Sitzrückenlehne eingestellt zu werden.

10. Vorrichtung nach einem der vorhergehenden Ansprüche, die Mittel zur automatischen Einstellung der Position des Sitzgurtbands umfasst.

## Revendications

1. Dispositif de réglage d'un système de retenue pour les occupants d'un véhicule, comportant un siège inclinable (1) muni d'un système (15) de ceinture de sécurité, ledit système de ceinture de sécurité comportant une sangle (5, 6, 7), une fixation (8) d'un côté du siège et un guide (9) susceptible d'être fixé du côté opposé, le dispositif comportant en outre des moyens (8, 9, 12) à l'aide desquels la position de la sangle (5, 7) de la ceinture de sécurité peut être réglée en fonction de la position assise (A, B) de l'occupant, ladite position assise s'échelonnant entre sensiblement verticale (A) et sensiblement horizontale (B),
**caractérisé en ce que** la position de la sangle (5, 7) de la ceinture de sécurité dans la position assise sensiblement horizontale (B) est disposée relativement plus en avant et vers le bas que dans la position assise sensiblement verticale (A), et **en ce que** le dispositif comporte un moyen (12) à l'aide duquel la fixation (8) et / ou le guide (9) sont montés en vue d'un mouvement de coulissement diagonal dans une direction avant et descendante.

2. Dispositif selon la revendication 1, la sangle (5) de la ceinture de sécurité comprenant une partie (7) de ceinture sous-abdominale ou pelvienne et une partie (6) de baudrier et la partie (7) de ceinture sous-abdominale ou pelvienne étant réglable au moyen dudit dispositif.

3. Dispositif selon la revendication 2, le système de ceinture de sécurité comportant une ceinture de sécurité à trois points comprenant une structure de montage.

4. Dispositif selon la revendication 3, la structure de montage étant fixée au pilier médian du véhicule.

5. Dispositif selon la revendication 3, la structure de montage étant fixée à la partie d'épaule du siège du véhicule.

6. Dispositif selon l'une des revendications précédentes, comportant un moyen de réglage de la position de la sangle de la ceinture de sécurité en fonction de l'angle d'inclinaison du dossier (3) du siège.

7. Dispositif selon la revendication 6, les moyens de positionnement de la sangle de la ceinture de sécurité étant couplés mécaniquement au dossier (3) du siège de façon à être réglés en fonction de l'angle d'inclinaison du dossier (3) du siège.

8. Dispositif selon la revendication 7, le dossier du siège et les moyens étant couplés mécaniquement via des roues dentées s'engrenant ensemble.

9. Dispositif selon la revendication 6, les moyens de positionnement de la sangle de la ceinture de sécurité étant couplés électroniquement au dossier (3) du siège de façon à être réglés en fonction de l'angle d'inclinaison du dossier (3) du siège.

10. Dispositif selon l'une des revendications précédentes, comportant des moyens de réglage automatique de la position de la sangle de la ceinture de sécurité.
